# EUROPÄISCHE PATENTANMELDUNG

(11) **EP 1 887 738 A1**
(43) Veröffentlichungstag der Anmeldung: **13.02.2008**
(21) Anmeldenummer: 06016826.7
(22) Anmeldetag: 11.08.2006
(51) Int. Cl.: H04L 12/56, H04L 12/28, H04L 29/06, H04Q 7/22

(54) **Festlegung des Veranlassers für eine Konfiguration oder einen Aufbau einer Zugangsnetzverbindung**

(71) Anmelder: SIEMENS AKTIENGESELLSCHAFT, 80333 München (DE)
(72) Erfinder: Belling, Dr. Thomas, 81477 München (DE); Schramm, Mirko, 13187 Berlin (DE)

(57) **Zusammenfassung**

Die Erfindung betrifft Vorrichtungen und Verfahren zum Veranlassen des Aufbaus und/oder der Konfigurierung einer Zugangsnetzverbindung (PDP Context B) für einen Zugang eines Endgerätes (UE) in ein Telekommunikationsnetz (GPRS, IMS), insbesondere ein zellulares Mobilfunknetz,
dadurch gekennzeichnet, dass vor dem Aufbau und/oder der Konfigurierung vom Telekommunikationsnetz entschieden (PCRF) wird, ob dieser Aufbau und/oder diese Konfigurierung der Zugangsnetzverbindung (PDP Context B) durch das Telekommunikationsnetz (GPRS, IMS, PCRF, PCEF, GGSN, AF, P-CSCF) oder durch das Endgerät (UE) veranlasst werden soll, und dass diese Entscheidung vom Telekommunikationsnetz dem Endgerät (UE) in einer oder mehrer Nachrichten mitgeteilt wird.

## Beschreibung

Die Erfindung betrifft Verfahren und Vorrichtung zum Veranlassen des Aufbaus einer Zugangsnetzverbindung für einen Zugang eines Endgerätes in ein Telekommunikationsnetz (im folgenden kurz Netz genannt), insbesondere ein zellulares Mobilfunknetz.

Zugangsverbindungen von einem Endgerät in ein Mobilfunk-, Daten- und/ oder Sprach- Telefonie- Netz können von Seiten des Endgerätes oder von Seiten des Netzes her aufgebaut und/oder konfiguriert werden. Bei Netzen, bei denen die verfügbaren Ressourcen im Zugangsnetz beschränkt sind, wie beispielsweise bei Mobilfunknetzen, ist es wünschenswert, die Zugangsverbindung (In einem 3GPP Netz beispielsweise ein so genannter "PDP Context" eines GPRS Netzes, oder aber ein so genannter "Radio Access Bearer" eines UTRAN oder GERAN Radionetzes) gemäß den Erfordernissen des gerade verwendeten Dienstes, wie beispielsweise eines VoIP Telefonats, oder einer so genannten "Video-Streaming" Applikation zu konfigurieren. So solle die Dienstqualität bezüglich Bandbreite und bezüglich weiterer die Dienstgüte beeinflussende Parameter wie maximaler Zeitverzögerung beim Pakettransport und wie maximaler Rate des Paketverlustes, die häufig mittels einer so genannten QoS Klasse zusammengefasst werden, den Erfordernissen der gerade verwendeten Dienste angepasst werden. Innerhalb des Netzes kann beispielsweise das so genannte "Internet Multimedia Subsystem" (IMS), das in 3GPP TS 23.228 standardisiert ist, zur Vermittelung des Dienstes und Applikationsservers zum Erbringen des Dienstes genützt werden. Das IMS ist ursprünglich als generisches Netz ausgelegt, das zur Erbringung einer Vielzahl von Diensten nötige Funktionalität wie zum Beispiel Vermittlung oder Authentisierung bietet, und somit die Einführung neuer Dienste ohne Anpassungen im Netz ermöglichen soll.

Die Anpassung der Zugangsnetzverbindung bezüglich der Erfordernisse des oder der gerade genützten Dienste kann entweder durch das Endgerät oder durch das Netz veranlasst werden.
Die Anpassung durch das Endgerät hat den Vorteil, dass das Endgerät in jedem Fall die Erfordernisse der Dienste genau kennt. Dies ist besonders für neue oder wenig genutzte Dienste von Vorteil, da eine spezielle Unterstützung der Dienste im Netz dann nicht erforderlich ist. Anderseits kann es zu Problemen kommen, wenn die Applikation nicht darauf eingestellt ist, die Zugangsnetzverbindung zu konfigurieren, beispielsweise weil sie nur einfache generische Programmierschnittstellen (APIs) nützt, die eine Konfiguration der Zugangsverbindung nicht oder nur eingeschränkt unterstützen, oder weil das Endgerät sich aus einem Teil, der die Zugangsnetzverbindung beendet und steuert, beispielsweise einem mobilen Telefon, und einem anderen Teil, auf dem der Dienst ausgeführt wird, beispielsweise einem Notebook, zusammensetzt, und die Schnittstelle zwischen den beiden Teilen wiederum die Konfiguration der Zugangsnetzverbindung nicht oder nur eingeschränkt unterstützt. Außerdem kann ein fehlerhaftes oder missbräuchlich programmiertes Endgerät für einen Dienst unnötig große Ressourcen anfordern und damit das Zugangsnetz beeinträchtigen. Daneben kann ein Aufbau der Zugangsnetzverbindung durch das Netz häufig bereits parallel neben der Dienstsignalisierung erfolgen, während der Aufbau durch das Endgerät häufig erst nach Abschluss der Dienstsignalisierung und damit langsamer erfolgt. Aus diesen Gründen wünschen viele Netzbetreiber die Zugangsnetzverbindungen für wichtige Dienste durch das Netz gemäß den Erfordernissen des Dienstes einstellen zu können.

Das so genannte "General Packet Radio Service" (GPRS) Zugangsnetz, das in 3GPP TS 23.060 standardisiert ist, sieht bisher lediglich den vom mobilen Endgeräten veranlassten Aufbau von PDP Kontexten vor.

Aufgabe der Erfindung ist es einen Aufbau und / oder eine Konfigurierung einer Zugangsnetzverbindung möglichst abwärtskompatibel und Fehler-vermeidend zu optimieren. Die Aufgabe wird jeweils durch die Gegenstände der unabhängigen Patentansprüche gelöst.
Die vorliegende Erfindung ermöglicht es in einer abwärtskompatiblen und Fehlerfälle ausschließenden Weise, dass das Netz Zugangsnetzverbindungen für bestimmte Dienste konfiguriert, während das Endgerät für andere Dienste die Zugangsnetzverbindungen konfiguriert.
Es ist auch möglich, dass zum selben Zeitpunkt von einem Endgerät aus sowohl solche Dienste genützt werden, für die das Netz die Zugangsnetzverbindung(en) einrichtet oder konfiguriert, wie auch selche Dienste, für die das Endgerät Zugangsnetzverbindung(en) einrichtet oder konfiguriert.

Für 3GPP Mobilfunknetze ist vorstellbar, beim Anmelden eines Endgerätes im GPRS Netz auszuhandeln, ob das Endgerät den neuen Netzwerk- initiierten Aufbau von PDP Kontexten unterstützt. Wenn das Endgerät diesen Aufbau unterstützt, solle er für das das Endgerät ausschließlich verwendet werden. Damit würde das Endgerät aber nur speziell durch das Netz unterstützte Dienste nützen können. Es ist auch vorstellbar, dass pro Dienst vom Netzbetreiber sowohl in allen Endgeräten wie auch im Netz konfiguriert wird, ob der Aufbau oder die Konfiguration von PDP Kontexten für diesen Dienst durch das Netz oder das Endgerät veranlasst werden soll. Wiederum wäre also bei der Einführung neuer Dienste erheblicher Konfigurationsaufwand erforderlich.

Beim Start eines neuen Dienstes wird zwischen dem Endgerät und dem Netz zunächst Signalisierung bezüglich des Dienstes ausgetauscht. Beispielsweise wird im Rahmen des IMS das so genannte "Session Initiation Protocol" (SIP), IETF RFC 3261, sowie das darin eingebettete so genannte "Session Description Protocol" (SDP), IETF RFC 4566 oder 2327, für diese Signalisierung genützt.

Ein wesentlicher Aspekt der Erfindung ist darin zu sehen, dass das Netz in Rahmen der Signalisierung z.B. zum Start des Dienstes dem Endgerät zunächst mitteilt, ob das Netz für diesen Dienst oder einzelne Komponenten dieses Dienstes (zum Beispiel den Medienstrom für Sprache oder dem Medienstrom für Video eines Videotelefoniedienstes) die Zugangsnetzverbindung(en) aufbauen oder konfigurieren wird, und dann mittels Signalisierung des Zugangsnetzes eine für den Dienst oder diese einzelnen Komponenten dieses Dienstes geeignete Zugangsnetzverbindung(en) aufbaut oder einrichtet, und dass das Endgerät an Hand der Mitteilung innerhalb der Signalisierung zum Aufbau des Dienstes entscheidet, ob es eine für den Dienst oder diese einzelnen Komponenten dieses Dienstes geeignete Zugangsnetzverbindung(en) selbst aufbaut oder konfiguriert.

Falls das Netz dem Endgerät mitteilt, dass es selbst eine für den Dienst oder einzelne Komponenten dieses Dienstes geeignete Zugangsnetzverbindung aufbauen wird, wartet das mobile Endgerät darauf, Signalisierung des Zugangsnetzes bezüglich der Einrichtung oder Konfiguration einer oder mehrer für den Dienst oder dieser einzelnen Komponenten dieses Dienstes geeignete Zugangsnetzverbindung(en) zu erhalten, und benützt dann diese Zugangsnetzverbindungen um dem Dienst oder dieser einzelnen Komponenten dieses Dienstes zugeordnete Datenströme zu senden und/oder zu empfangen. Dadurch wird zusätzliche Signalisierungslast und unnötige Belegung von Ressourcen im Zugangsnetz ebenso wie ein möglicher fehlerhafter Verbindungsabbau vermieden: Es wird vermieden, dass Netz und Endgerät gleichzeitig Zugangsnetzverbindungen für den Dienst oder für diese einzelnen Komponenten dieses Dienstes aufbauen. Dies würde dazu führen, dass es zu erhöhter Signalisierungslast im Zugangsnetz kommt und zumindest zeitweilig unnötig viele Ressourcen reserviert werden. Daneben könnte es zu einem Abbruch der Verbindung kommen, wenn wiederum sowohl Endgerät wie Netz feststellen, dass die für den Dienst oder für diese einzelnen Komponenten dieses Dienstes nötigen Zugangsnetzverbindungen doppelt vorhanden sind und dann gleichzeitlich den Abbau von überzähligen Verbindungen veranlassen. Wenn Netz und Endgerät jeweils andere Verbindungen für den Abbau auswählen, könnte die Verbindung vollständig unterbrochen werden.

Das Netz teilt dem Endgerät mittels über die Signalisierung des Zugangsnetzes übermittelter und jeweils einer Zugangsnetzverbindung zugeordneter und mit Prioritäten versehener Paketfilter, die IP Adressen sowie Port Nummer von Sender und Empfänger der Datenströme enthalten können, also so genannter "Traffic Flow Templates" (TFT), mit, welche Datenströme in welcher durch das Netz aufgebauten oder konfigurierten Zugangsnetzverbindung transportiert werden sollen. Das Netz sendet solche TFTs nur für Datenströme, die zu Diensten oder zu einzelnen Komponenten von Diensten gehören, für die das Netz die mobile Zugangsverbindung aufbaut oder konfiguriert. Anderseits muss das Endgerät aber auch andere von ihm gesendete Datenströme auf Zugangsnetzverbindungen verteilen. Vorzugsweise wendet das Endgerät die vom Netz übertragen TFTs nur zur Zuordnung von denjenigen Datenströmen an, die zu Diensten oder zu einzelnen Komponenten von Diensten gehören, für die das Netz vorher dem Endgerät mittels Dienstsignalisierung mitgeteilt hat, dass es Zugangsnetzverbindung(en) aufbauen oder konfigurieren wird. Damit wir vermieden, dass es im Endgerät zu sonst möglichen Konflikten kommt zwischen der Zuordnung von Datenströmen zu Zugangsnetzverbindungen gemäß der vom Netz gesendeten TFTs und der Zuordnung gemäß einem internen Algorithmus im Endgerät, wie sie für Dienste oder für einzelnen Komponenten von Diensten erforderlich ist, für die das Endgerät selbst die Zugangsnetzverbindungen aufbaut oder konfiguriert.

Falls das Netz dem Endgerät mitteilt, dass es für den Dienst oder für einzelne Komponenten des Dienstes keine Zugangsnetzverbindung aufbauen oder konfigurieren wird, veranlasst das Endgerät selbst den Aufbau oder die Konfiguration von geeigneten Zugangsnetzverbindungen.

Im Rahmen von GPRS, das bisher lediglich den Aufbau und die Konfiguration von Zugangsnetzverbindungen durch das Endgerät vorsah, ist es günstig, wenn das Endgerät dem Netz bereits zum Zeitpunkt der GPRS Registrierung mitteilt, dass es den Aufbau und die Konfiguration von Zugangsverbindungen unterstützt sowie die erfindungsgemäße Mitteilung in der Signalisierung bezüglich des Dienstes oder für einzelne Komponenten des Dienstes ob das Netz für diesen Dienst oder für diese einzelnen Komponenten des Dienstes die Zugangsnetzverbindung(en) aufbauen oder konfigurieren wird. Nur wenn das Netz während der GPRS Registrierung eine entsprechende Mitteilung erhält, kann das Netz entscheiden, selbst die Zugangsnetzverbindungen für einen Dienst oder für einzelne Komponenten eines Dienstes aufzubauen und dem Endgerät die entsprechende erfindungsgemäße Mitteilung in der Signalisierung bezüglich des Dienstes oder bezüglich einzelner Komponenten des Dienstes senden. Es ist aus Gründen der Abwärtskompatibilität auch vorteilhaft, wenn eine erfindungsgemäße Mitteilung in der Signalisierung bezüglich des Dienstes oder bezüglich einzelner Komponenten des Dienstes nur dann gesendet wird, wenn das Netz die Zugangsnetzverbindungen für den Dienst selbst aufbaut oder konfiguriert. Wenn das Netz dagegen entscheidet, dass das Endgerät selbst die Zugangsnetzverbindungen für den Dienst aufbauen oder konfigurieren soll, sendet das Netz vorzugsweise keine Mitteilung in der Dienstsignalisierung. Dies entspricht dem Verhalten eines älteren GPRS Zugangsnetzes, dass die Mitteilung nicht unterstützt und erwartet, dass das Endgerät die Zugangsnetzverbindungen für den Dienst selbst aufbaut oder konfiguriert. Ein mit dem GPRS Zugangsnetz verbundenes Endgerät baut die Zugangsnetzverbindung(en) für einen Dienst oder für einzelne Komponenten des Dienstes stets selbst auf bzw. konfiguriert sie, wenn es keine Mitteilung vom Netz bezüglich des Dienstes oder bezüglich einzelner Komponenten des Dienstes empfängt.

Bei anderen Arten von Zugangsnetzen als GPRS kann es vorteilhaft sein, für das Endgerät ein anderes Verhalten vorzusehen, wenn es in der Dienstsignalisierung keine Mitteilung darüber erhält, ob Netz oder Endgerät die Zugangsnetzverbindungen für einen Dienst oder für einzelne Komponenten des Dienstes aufbauen bzw. konfigurieren. So wird in WIMAX zunächst nur der Aufbau bzw. die Konfiguration von Zugangsnetzverbindungen durch das Netz möglich sein. Sollte die Möglichkeit eines Aufbaus von Zugangsnetzverbindungen durch das Endgerät ergänzt werden, ist es günstig, wenn ein Endgerät diese Möglichkeit nur dann nützt, wenn es eine entsprechende Aufforderung in der Dienstsignalisierung erhält. Enthält die Dienstsignalisierung keine Mitteilung darüber, ob Netz oder Endgerät die Zugangsnetzverbindungen für den Dienst oder für einzelne Komponenten des Dienstes aufbaut oder konfiguriert, sollte das Endgerät drauf warten, dass das Netz den Aufbau bzw. die Konfiguration vornimmt.

Die Entscheidung des Netzes, ob das Netz oder das Endgerät die Zugangsnetzverbindung aufbaut, kann von der Art des Dienstes oder der einzelnen Komponenten des Dienstes abhängen. Zusätzlich kann sie von der Art und den Fähigkeiten des Zugangsnetzes oder den Rechten, die ein Betreiber einem Benutzer einräumt, abhängen. Vorzugsweise wird zumindest bei dem Netz unbekannten Diensten oder bei einzelnen ungekannten Komponenten eines Dienstes der Aufbau bzw. die Konfiguration der Zugangsnetzverbindungen durch das Endgerät ausgewählt.

Innerhalb des Netzes wird der Aufbau der Zugangsnetzverbindungen durch die so genannte "Policy and Charging Rules Function" (PCRF) kontrolliert, wie in 3GPP TS 23.203 standardisiert wird. Die PCRF ist über die so genannte Gx Schnittstelle mit einer so genannten "Policy and Charging Enforcement Function" (PCEF) verbunden, die sich im Falle von GPRS innerhalb des so genannten "Gateway GPRS Support Node" (GGSN) befindet, der das Zugangsnetz mit einem anderen Paketnetz verbindet, wie beispielsweise dem IMS-Kernnetz oder dem Intranet. Die PCRF ist über die so genannte Rx Schnittstelle mit einer so genannten "Applikationsfunktion" (AF) verbunden, die an Signalisierung bezüglich des Starts von Diensten beteiligt ist und die PCRF mit Informationen über den Dienst versorgt. Beispielsweise dient im IMS die so genannte "Proxy Call Session Control Function" (P-CSCF) als AF. Die P-CSCF reicht SIP-Signalisierung zur Kontrolle von Diensten zwischen IMS und Endgerät weiter, und reicht aus dem eingebettet SDP abgeleitete Information bezüglich des Dienstes, im Besonderen über die Art der Medienströme (als Komponenten des Dienstes) und der für sie verwendeten Codecs, an die PCRF weiter.

Es ist vorteilhaft, wenn die PCRF für das Netz die Entscheidung trifft, ob für einen Dienst oder für einzelne Komponenten eines Dienstes das Netz oder das Endgerät Zugangsnetzverbindungen aufbauen bzw. konfigurieren soll, da die PCRF ein zentraler Ort (oder der zentrale Ort) zur Administration von Regeln (engl "policies") des Netzbetreibers ist und auch über eine Schnittstelle mit der Benutzerdatenbank spezielle Einstellungen bezüglich von Dienstes für einzelne Benutzer erfragen kann. Wenn die PCRF Information bezüglich neuer Dienste von einem AF erhält, teilt die PCRF dem AF als Antwort mit, ob das Netz oder das Endgerät für diesen Dienst oder für einzelne Komponenten des Dienstes die Zugangsnetzverbindungen aufbauen bzw. konfigurieren soll. Der AF reicht diese Mitteilung dann in der Signalisierung bezüglich des Dienstes an das Endgerät weiter. Wenn das Netz die Zugangsnetzverbindungen aufbaut, veranlasst die PCRF über die Gx Schnittstelle dann den Aufbau oder die Konfiguration einer Zugangsnetzverbindung für den oder Dienste. Andernfalls autorisiert die PCRF den Aufbau oder die Konfiguration von Zugangsnetzverbindungen für den Dienst oder für die einzelnen Komponenten des Dienstes durch das Endgerät.

Wenn SIP zur Signalisierung bezüglich des Dienstes verwendet wird, ist es vorteilhaft, die Mitteilung, ob oder dass das Netz die Zugangsnetzverbindungen aufbaut oder konfiguriert, innerhalb eines neuen so genannten SIP "Headers" mitzuteilen. Dadurch ist eine Mitteilung möglich, die sich auf den ganzen dienst bezeieht. Alternativ kann im eingebettet SDP ein neues Attribut definiert werden, dass dies Mitteilung enthält. Die Signalisierung im SDP hat den Vorteil, dass hier für einzelne Medienströme als Komponenten eines Dienstes, die in derselben SIP Nachricht verhandelt werden, unterschiedliche Entscheidungen mitgeteilt werden können.

Die Erfindung ermöglicht es, dass nach vom Betreiber konfigurierten dienstabhängigen Regeln entschieden wird, ob Zugangsnetzverbindungen für bestimmte Dienste oder für bestimmte Komponenten von Diensten durch das Netz oder das Endgerät aufgebaut werden. Dadurch behält der Betreiber einerseits besonders für viel genützte Dienste oder Komponenten von Diensten maximale Kontrolle über die im Zugangsnetz verwendeten Ressourcen und anderseits wird vermieden, dass für neue oder wenig genutzte Dienste oder Komponenten von Diensten Anpassungen im Netz erforderlich sind. Es wird ermöglicht, dass die entsprechenden Entscheidungsregeln nur an wenigen Kontrollknoten (z.B. PCRF) vom Betreiber abgelegt werden. Eine aufwendige Konfiguration von Endgeräten wird vermieden. Es wird auch vermieden, das Netz und Endgerät gleichzeitig für einen Dienst oder die selben Komponenten eines Diensten Zugangsnetzverbindungen aufbauen oder konfigurieren, was zu zusätzlicher Signalisierungslast und unnötige Belegung von Ressourcen im Zugangsnetz ebenso wie zu einem Verlust der Verbindung führen könnte.

Weitere Merkmale und Vorteile der Erfindung ergeben sich aus den Patentansprüchen und der nachfolgenden Beschreibung eines Ausführungsbeispiels anhand der Zeichnung, Dabei zeigt:
Fig. 1 eine typische Konfiguration von Netzkomponenten eine Telekommunikationsnetzes,
Fig. 2 ein Signalisierungsdiagramm für einen Dienstaufbau mit dem Endgerät als Anrufer und
Fig. 3 ein Signalisierungsdiagramm für einen Dienstaufbau mit dem Endgerät als Angerufenem.

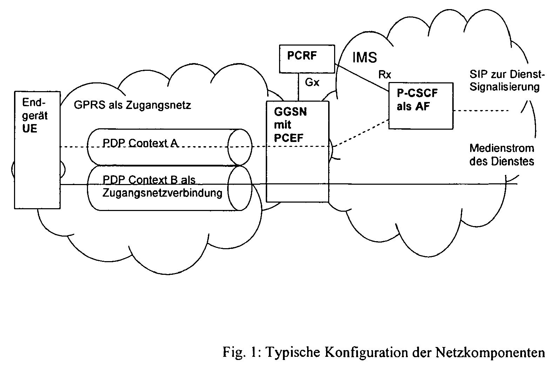

Fig. 1 zeigt eine typische Konfiguration von Netzkomponenten eine Telekommunikationsnetzes.
Es sind ein mobiles Endgerät UE, eine Gateway GPRS Support Node GGSN mit Policy and Charging Enforcement Function PCEF, eine Policy and Charging Rules Function PCRF und eine Proxy Call Session Control Function P-CSCF als Applikationsfunktion AF innerhalb eines Internet Multimedia Subsystem IMS dargestellt. Das Endgerät UE nützt zwei PDP Kontexte A und B als Zugangsnetzverbindungen zum GGSN durch das mobile Zugangsnetz GPRS. In PDP Context A wird SIP Signalisierung bezüglich eines Dienstes, wie beispielsweise VoIP, zwischen UE and P-CSCF befördert. P-CSCF reicht diese Signalisierung zum bzw. vom IMS weiter. PDP Context B wird als Zugangsnetverbindung für den Dienst verwendet.

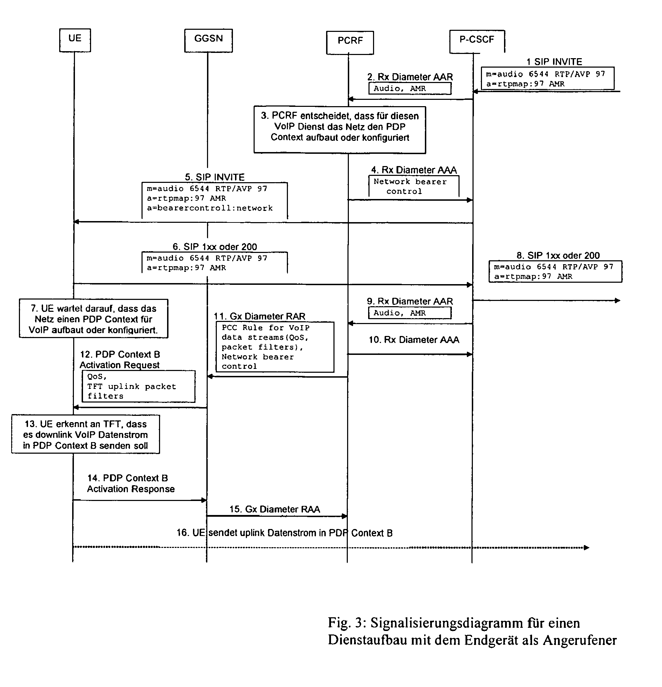

Fig. 2 zeigt ein Signalisierungsdiagramm für einen Dienstaufbau mit dem Endgerät als Anrufer.
Es sind Nachrichten zwischen den in Abbildung 1 gezeigten Knoten und weiteren Elmente dargestellt, die beim Aufbau eines VoIP Telefonats verwendet werden, wobei der Teilnehmer am Endgerät UE Anrufer ist. Es sind nur für das Verständnis der Erfindung förderliche, ausgewählte SIP Nachrichten dargestellt. Der Nachrichtenfluss ist im Einzelnen wie folgt:
1. Das UE sendet eine SIP INVITE Nachricht und beschreibt im eingebetteten SDP einen VoIP Dienst.
2. Die SIP INVITE Nachricht wird von der P-CSCF weitergeleitet.
3. Die P-CSCF empfängt eine SIP Antwort Nachricht, die eingebettetes SDP enthält, zum Beispiel eine 183 Session Progress Nachricht, eine 180 Ringing Nachricht, oder eine 200 OK(INVITE) Nachricht,
4. Die P-CSCF informiert die PCRF mittels einer Diameter AAR Nachricht über das Rx Interface über den Aufbau eines neuen Dienstes und beschreibt den Dienst mittels Parameter, die aus dem in Nachrichten 1 und 3 empfangenen SDP abgeleitet werden.
5. Die PCRF entscheidet erfindungsgemäß, dass für diesen VoIP Dienst das Netz den PDP Context aufbaut oder konfiguriert.
6. Die PCRF sendet eine Diameter AAA Nachricht über das Rx Interface an die P-CSCF und informiert erfindungsgemäß mittels eines neuen Parameters, dass für den in Nachricht 4 angegebenen Dienst das Netz den PDP Context aufbaut oder konfiguriert.
7. Die P-CSCF leitet die in Schritt 3 empfangene SIP Antwort Nachricht weiter. In dem enthaltenen SDP fügt die P-CSCF erfindungsgemäß auf Grund der in Nachricht 6 empfangenen Information ein neues SDP Attribut "a=bearercontroll:network"ein, dass für den VoIP Medienstrom angibt, dass er eine durch das Netz aufgebaute oder kontrollierte Zugangsnetzverbindung verwenden soll.
8. Auf Grund der in Nachricht 7 empfangenen Information entscheidet das Terminal, für diesen Dienst nicht selbst einen PDP Context aufzubauen oder zu konfigurieren, sondern auf GPRS-spezifische Signalisierung über vom Netz aufgebaute oder modifizierte PDP Kontexte zu warten.
9. Die PCRF veranlasst den GGSN mittels einer über die Gx Schnittstelle gesendeten Diameter RAR Nachricht, einen PDP Context für den neuen Dienst aufzubauen oder zu konfigurieren. Die PCRF sendet dazu eine oder mehrere für den VoIP Dienst geeignete so genannte "PCC Rules", die Paketfilter sowie Angaben zur benötigten Dienstqualität enthalten, sowie einen Hinweis, dass der GGSN für diese PCC Regeln einen geeigneten PDP Kontext aufbauen oder konfigurieren soll.
10. Der GGSN beschließt auf Grund der in Nachricht 9 enthaltenen Information, den neuen PDP Context B aufzubauen und sendet dazu eine "PDP Context Activation Request Nachricht", die Angaben zur benötigten Dienstqualität sowie TFT Filter für Datenströme in "Uplink" Richtung enthält. Diese Paketfilter sind aus den Filtern in Nachricht 9 abgeleitet.
11. Das UE erkennt an Hand der empfangenen TFT, dass es uplink Datenströme für den neuen VoIP Dienst in PDP Context B senden soll.
12. Das UE sendet eine "PDP Context Activation Response" Nachricht, um den Aufnau von PDP Context B abzuschließen.
13. Der GGSN sendet eine Diameter RAR Nachricht über die Gx Schnittstelle.
14. Das UE beginnt, uplink Datenströme für den neuen VoIP Dienst in PDP Context B zu senden.

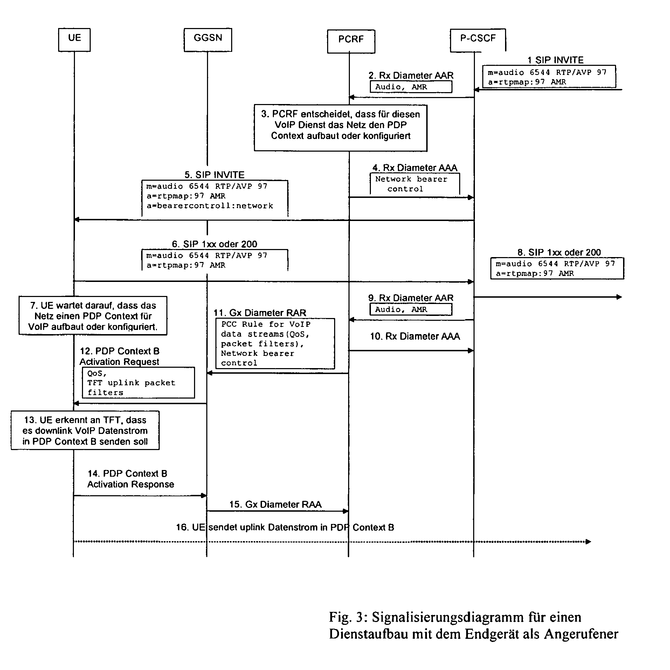

Fig. 3 zeigt ein Signalisierungsdiagramm für einen Dienstaufbau mit dem Endgerät als Angerufener.
Es sind Nachrichten zwischen den in Abbildung 1 gezeigten Knoten dargestellt, die beim Aufbau eines VoIP Telefonats verwendet werden, wobei der Teilnehmer am Endgerät UE Anrufer ist. Es sind nur ausgewählte SIP Nachrichten dargestellt. Der Nachrichtenfluss ist im Einzelnen wie folgt:
1. Die P-CSCF empfängt eine SIP INVITE Nachricht mit eingebettetem SDP, das einen VoIP Dienst beschreibt.
2. Die P-CSCF informiert die PCRF mittels einer Diameter AAR Nachricht über das Rx Interface über den Aufbau eines neuen Dienstes und beschreibt den Dienst mittels Parametern, die aus dem in Nachricht 1 empfangenen SDP abgeleitet werden.
3. Die PCRF entscheidet erfindungsgemäß, dass für diesen VoIP Dienst das Netz den PDP Context aufbaut oder konfiguriert.
4. Die PCRF sendet eine Diameter AAA Nachricht über das Rx Interface an die P-CSCF und informiert erfindungsgemäß mittels eines neuen Parameters, dass für den in Nachricht 2 angegebenen Dienst das Netz den PDP Context aufbaut oder konfiguriert.
5. Die SIP INVITE Nachricht 1 wird von der P-CSCF weitergeleitet. In dem enthaltenen SDP fügt die P-CSCF erfindungsgemäß auf Grund der in Nachricht 6 empfangenen Information ein neues SDP Attribut "a=bearercontroll:network" ein, dass für den VoIP Medienstrom angibt, dass er eine durch das Netz aufgebaute oder kontrollierte Zugangsnetzverbindung verwenden soll.
6. Das UE sendet eine SIP Antwort Nachricht, die eingebettetes SDP enthält, zum Beispiel eine 183 Session Progress Nachricht, eine 180 Ringing Nachricht, oder eine 200 OK(INVITE) Nachricht, und führt damit den Aufbau des VoIP Dienstes weiter. Im SDP befinden sich Angaben zu eigenen Adressen des UE sowie ausgewählte Codecs.
7. Auf Grund der in Nachricht 5 empfangenen Information entscheidet das Terminal, für diesen Dienst nicht selbst einen PDP Context aufzubauen oder zu konfigurieren, sondern auf GPRS-spezifische Signalisierung über vom Netz aufgebaute oder modifizierte PDP Kontexte zu warten.
8. Die P-CSCF informiert die PCRF mittels einer Diameter AAR Nachricht über das Rx Interface über die Weiterführung des Aufbaus des neuen Dienstes aus Nachricht 2 und ergänzt die Beschreibung des Dienstes beschreibt mittels Parameter, die aus dem in Nachricht 7 empfangenen SDP abgeleitet werden.
9. Die PCRF sendet eine Diameter AAA Nachricht über das Rx Interface an die P-CSCF, um Nachricht 8 zu bestätigen.
10. Die P-CSCF leitet die in Schritt 6 empfangene SIP Antwort Nachricht weiter.
11. bis 16. Wie Nachrichten 9.-14. in Abbildung 2.

## Patentansprüche

1. Verfahren zum Steuern des Veranlassens des Aufbaus und/oder der Konfigurierung einer oder mehrerer Zugangsnetzverbindungen (PDP Context B) für einen Zugang eines Endgerätes (UE) in ein Telekommunikationsnetz (GPRS und/oder IMS), insbesondere ein zellulares Mobilfunknetz,
**dadurch gekennzeichnet, dass**
vor dem Aufbau und/oder der Konfigurierung vom Telekommunikationsnetz entschieden (PCRF) wird, ob dieser Aufbau (Fig. 2, "10."; Fig 3, "12.") und/oder diese Konfigurierung der Zugangsnetzverbindung (PDP Context B) durch das Telekommunikationsnetz (GPRS, IMS, PCRF, PCEF, GGSN, AF, P-CSCF) oder durch das Endgerät (UE) veranlasst (Fig 2, "10.") werden soll, und dass
diese Entscheidung vom Telekommunikationsnetz dem Endgerät (UE) in einer oder mehren Nachrichten (Fig 2, "7."; Fig. 3, "5.") mitgeteilt wird.

2. Verfahren nach Anspruch 1,
**dadurch gekennzeichnet,**
**dass** die Entscheidung, ob der Aufbau und/oder die Konfigurierung der einen oder mehreren Zugangsnetzverbindungen durch das Telekommunikationsnetz oder durch das Endgerät (UE) ausgelöst werden soll, sich auf einen oder mehrere Dienste oder Komponenten von Diensten bezieht, insbesondere auf Dienste oder Komponenten von Dienste, deren Aufbau oder Veränderung zum Zeitpunkt der Entscheidung durch Austausch von Signalisierung zwischen Netz und Endgerät veranlasst wird.

3. Verfahren nach einem der vorhergehenden Ansprüche,
**dadurch gekennzeichnet,**
**dass** die Entscheidung anhand vorher festgelegte Regeln getroffen wird, die für bestimmte Dienste oder bestimmte Komponenten von Diensten angeben, dass für diese Dienste oder Komponenten ein Aufbau und/oder eine Konfigurierung von Zugangsnetzverbindungen (PDP Context B) durch das Telekommunikationsnetz (GPRS, IMS, PCRF, PCEF, GGSN, AF, P-CSCF) ausgelöst werden soll.

4. Verfahren nach einem der vorhergehenden Ansprüche,
**dadurch gekennzeichnet,**
**dass** für unbekannte Dienste, für die keine vorher festgelegten Regeln vorhanden sind, entschieden wird, dass das Endgerät den Aufbau und/oder die Konfigurierung von Zugangsnetzverbindungen veranlasst.

5. Verfahren nach einem der vorhergehenden Ansprüche,
**dadurch gekennzeichnet,**
**dass** die Entscheidung des Telekommunikationsnetzes (GPRS, IMS), ob das Telekommunikationsnetz (GPRS, IMS) oder das Endgerät (UE) die Zugangsnetzverbindung (PDP Context B) aufbaut von der Art und den Fähigkeiten des Zugangsnetzes oder den Rechten, die ein Betreiber einem Benutzer einräumt, abhängt.

6. Verfahren nach einem der vorhergehenden Ansprüche,
**dadurch gekennzeichnet,**
**dass** für Teile eines Dienstes das Telekommunikationsnetz (GPRS, IMS, PCRF, PCEF, GGSN, AF, P-CSCF) den Aufbau und/oder die Konfiguration veranlasst, während für andere Teile dieses Dienstes das Endgerät (UE) den Aufbau und/oder die Konfiguration veranlasst.

7. Verfahren nach einem der vorhergehenden Ansprüche,
**dadurch gekennzeichnet,**
**dass** von einem oder mehreren Elementen (PCRF, P-CSCF) des Telekommunikationsnetzes entschieden wird,
ob ein Aufbau der Zugangsnetzverbindung (PDP Context B) durch das Telekommunikationsnetz oder das Endgerät (UE) ausgelöst werden soll.

8. Verfahren nach einem der vorhergehenden Ansprüche,
**dadurch gekennzeichnet,**
**dass** beim Start oder der Veränderung eines Dienstes oder einer oder mehrer Komponenten eines Dienstes zwischen dem Endgerät (UE) und dem Telekommunikationsnetz (GPRS, IMS) zunächst Signalisierung bezüglich des Dienstes ausgetauscht wird, insbesondere mit dem "Session Initiation Protocol" SIP und / oder dem "Session Description Protocol" (SDP).

9. Verfahren nach einem der vorhergehenden Ansprüche,
**dadurch gekennzeichnet,**
**dass** die Mitteilung (Fig. 2: "7.", Fig. 3: "3.") an das Endgerät (UE), ob ein Aufbau der Zugangsnetzverbindung (PDP Context B) durch das Telekommunikationsnetz oder das Endgerät (UE) ausgelöst werden soll, im Rahmen der Signalisierung zum Start oder der Modifikation des Dienstes oder der Komponenten des Dienstes dem Endgerät (UE) mitgeteilt wird.

10. Verfahren nach einem der vorhergehenden Ansprüche,
**dadurch gekennzeichnet,**
**dass** das Endgerät (UE) an Hand einer Mitteilung, ob der Aufbau und/oder die Konfigurierung der einen oder mehreren Zugangsnetzverbindungen durch das Telekommunikationsnetz oder durch das Endgerät (UE) ausgelöst werden soll, entscheidet, ob es eine für den Dienst geeignete Zugangsnetzverbindung(en) selbst aufbaut oder konfiguriert.

11. Verfahren nach einem der vorhergehenden Ansprüche,
**dadurch gekennzeichnet,**
**dass** falls das Telekommunikationsnetz (GPRS, IMS) dem Endgerät (UE) mitteilt, dass es selbst eine für den Dienst geeignete Zugangsnetzverbindung (PDP Context B) aufbauen wird, das mobile Endgerät (UE) darauf wartet, Signalisierung des Zugangsnetzes bezüglich der Einrichtung oder Konfiguration einer oder mehrer für den Dienst geeigneter Zugangsnetzverbindung(en) zu erhalten, und dann diese Zugangsnetzverbindungen (PDP Context B) benützt, um dem Dienst zugeordnete Datenströme zu senden und/oder zu empfangen.

12. Verfahren nach einem der vorhergehenden Ansprüche,
**dadurch gekennzeichnet,**
**dass** vermieden wird, dass das Telekommunikationsnetz (GPRS, IMS) und das Endgerät (UE) gleichzeitig Zugangsnetzverbindungen (PDP Context B) für den selben Dienst aufbauen.

13. Verfahren nach einem der vorhergehenden Ansprüche,
**dadurch gekennzeichnet,**
**dass** das Telekommunikationsnetz (GPRS, IMS) dem Endgerät (UE) mittels über die Signalisierung des Zugangsnetzes übermittelter und jeweils einer Zugangsnetzverbindung (PDP Context B) zugeordneter und mit Prioritäten versehener Paketfilter, die IP Adressen sowie Port Nummer von Sender und Empfänger der Datenströme enthalten können, ("Traffic Flow Templates TFT") mitteilt, welche Datenströme in welcher durch das Telekommunikationsnetz (GPRS, IMS) aufgebauten oder konfigurierten Zugangsnetzverbindung (PDP Context B) transportiert werden sollen.

14. Verfahren nach Anspruch 12,
**dadurch gekennzeichnet,**
**dass** das Telekommunikationsnetz (GPRS, IMS) solche TFTs nur für Datenströme sendet, die zu Diensten oder Komponenten von Diensten gehören, für die das Telekommunikationsnetz (GPRS, IMS) die mobile Zugangsverbindung aufbaut oder konfiguriert.

15. Verfahren nach einem der vorhergehenden Ansprüche,
**dadurch gekennzeichnet,**
**dass** das Endgerät (UE) die vom Telekommunikationsnetz (GPRS, IMS) übertragen TFTs nur zur Zuordnung von denjenigen Datenströmen anwendet, die zu Diensten oder Komponenten von Diensten gehören, für die das Telekommunikationsnetz (GPRS, IMS) vorher dem Endgerät (UE) mittels einer Dienstsignalisierung mitgeteilt hat, dass es mindestens eine Zugangsnetzverbindung (PDP Context B) aufbauen oder konfigurieren wird.

16. Verfahren nach einem der vorhergehenden Ansprüche,
**dadurch gekennzeichnet,**
**dass** falls das Telekommunikationsnetz (GPRS, IMS) dem Endgerät (UE) mitteilt, dass es für den Dienst keine Zugangsnetzverbindung (PDP Context B) aufbauen oder konfigurieren wird, das Endgerät (UE) selbst den Aufbau oder die Konfiguration von geeigneten Zugangsnetzverbindungen (PDP Context B) veranlasst.

17. Verfahren nach einem der vorhergehenden Ansprüche,
**dadurch gekennzeichnet,**
**dass** für eine GPRS- Zugangsverbindung das Endgerät (UE) dem Telekommunikationsnetz (GPRS, IMS) bereits zum Zeitpunkt der GPRS Registrierung mitteilt, dass es den Aufbau und die Konfiguration von Zugangsverbindungen unterstützt sowie die Mitteilung des Netzes versteht, ob das Telekommunikationsnetz (GPRS, IMS) oder das Endgerät die Zugangsnetzverbindung(en) aufbauen oder konfigurieren soll.

18. Verfahren nach Anspruch 16,
**dadurch gekennzeichnet,**
**dass** nur wenn das Telekommunikationsnetz (GPRS, IMS) während der GPRS Registrierung eine entsprechende Mitteilung erhält, das Telekommunikationsnetz (GPRS, IMS) entscheidet, selbst Zugangsnetzverbindungen (PDP Context B) aufzubauen und dann dem Endgerät (UE) eine oder mehrere entsprechende Mitteilungen sendet.

19. Verfahren nach einem der vorhergehenden Ansprüche,
**dadurch gekennzeichnet,**
**dass** eine Mitteilung , ob das Netz oder das Endgerät Zugangsnetzverbindungen aufbaut, nur dann gesendet wird, wenn das Telekommunikationsnetz (GPRS, IMS) die Zugangsnetzverbindungen (PDP Context B) für den Dienst selbst aufbaut oder konfiguriert, insbesondere wenn GPRS als Zugangsnetz genützt wird.

20. Verfahren nach einem der vorhergehenden Ansprüche,
**dadurch gekennzeichnet,**
**dass** das Endgerät dann, wenn es keine Mitteilung erhält, ob das Netz oder das Endgerät Zugangsnetzverbindungen aufbaut, selbst Zugangsnetverbindungen aufbaut, insbesondere wenn GPRS als Zugangsnetz genützt wird.

21. Verfahren nach einem der vorhergehenden Ansprüche,
**dadurch gekennzeichnet,**
**dass** SIP zur Signalisierung bezüglich des Dienstes verwendet wird, und dass die Mitteilung, ob das Endgerät (UE) oder dass das Telekommunikationsnetz (GPRS, IMS) die Zugangsnetzverbindungen (PDP Context B) aufbaut oder konfiguriert, innerhalb eines SIP "Headers" mitgeteilt wird.

22. Verfahren nach einem der vorhergehenden Ansprüche,
**dadurch gekennzeichnet,**
**dass** die Mitteilung, ob das Endgerät (UE) oder dass das Telekommunikationsnetz (GPRS, IMS) die Zugangsnetzverbindungen (PDP Context B) aufbaut oder konfiguriert, innerhalb eines SDP Attribut mitgeteilt wird.

23. Vorrichtung (PCRF) zum Veranlassen des Aufbaus einer Zugangsnetzverbindung (PDP Context B) in einem Telekommunikationsnetz (GPRS, IMS), insbesondere in einem zellularen Mobilfunknetz,
**dadurch gekennzeichnet,**
**dass** sie folgendes umfasst:
- eine Entscheidungseinrichtung (PCRF) zum Entscheiden vor dem Aufbau einer Zugangsnetzverbindung (PDP Context B) darüber, ob der Aufbau oder die Konfiguration der Zugangsnetzverbindung (PDP Context B) durch das Telekommunikationsnetz (GPRS, IMS) oder das Endgerät (UE) veranlasst werden soll.

24. Vorrichtung nach Anspruch 25,
**dadurch gekennzeichnet,**
**dass** sie ferner folgendes umfasst:
- einen Speicher (in PCRF) für Regeln für Dienste, welche Regeln angeben ob jeweils für einen bestimmten Dienst eine Zugangsnetzverbindung (PDP Context B) durch das Telekommunikationsnetz (GPRS, IMS) oder durch das Endgerät (UE) aufgebaut und/ oder konfiguriert werden soll.
